# EUROPEAN PATENT SPECIFICATION

(11) **EP 2 866 394 B1**
(45) Date of publication and mention of the grant of the patent: **18.04.2018**
(21) Application number: 13796745.1
(22) Date of filing: 09.06.2013
(51) Int. Cl.: H04L 12/703, H04L 12/715, H04L 12/723, G06F 11/07, H04L 12/24

(54) **METHOD AND DEVICE FOR SENDING INTER-DOMAIN FAULT INFORMATION**
VERFAHREN UND VORRICHTUNG ZUM SENDEN VON INFORMATIONEN ÜBER DOMÄNENÜBERGREIFENDE FEHLER
PROCÉDÉ ET DISPOSITIF PERMETTANT D'ENVOYER DES INFORMATIONS DE DÉFAILLANCE INTER-DOMAINE

(30) Priority: 08.08.2012 CN 201210280557
(43) Date of publication of application: 29.04.2015
(73) Proprietor: ZTE Corporation, Shenzhen, Guangdong 518057 (CN)
(72) Inventor: WANG, Mingxiu, Shenzhen Guangdong 518057 (CN)
(74) Representative: D'Halleweyn, Nele Veerle Trees Gertrudis
(86) International application number: PCT/CN2013/077069
(87) International publication number: WO 2013/178098

(56) References cited:
- CN-A- 101 056 203
- CN-A- 101 715 149
- CN-A- 102 546 248
- ZIYING CHEN: "The LSP Protection / Restoration Mechanism in GMPLS", INTERNET CITATION, October 2002 (2002-10), XP002239552, Retrieved from the Internet: URL:http://beethoven.site.uottawa.ca/dsrg/ PublicDocuments/REPORTS-THESES/MasterProje ct-ZiyingChen-2002.pdf [retrieved on 2003-04-28]

## Description

### Technical Field

The present invention relates to the field of communications, and in particular, to a method and apparatus for transmitting inter-domain fault information.

### Background of the Related Art

In communication networks, there are a variety of bearer devices, for example, a backbone network device includes devices such as a Dense Wavelength Division Multiplexing (DWDM for short) type device, a Packet Transport Network (PTN for short) device, a Synchronous Digital Hierarchy (SDH for short) device, a router etc. to access to the backbone network. In the network with a mixture of devices, different devices belong to different layers, for example, a DWDM device network belongs to a service layer, and a PTN device network belongs to a client layer. At the same time, as the communication networks are located in different areas, they belong to different Autonomous Systems (ASs) (also referred to as AS domains).

In these multi-layer multi-domain networks, end-to-end client services need to pass through various networks, and various networks may belong to different layers and different AS domains. In an Internet Engineering Task Force (IETF for short) standard, a Forwarding Adjacency-LSP (FA-LSP) technology is used in networks of different layers to establish a connection of a service layer for use by a client layer. In order to improve survivability of a device, in different networks, operators may deploy protection and recovery, and when a certain network fails, not only the protection and recovery of the local layer will be triggered, but also services of a client layer will also receive an alarm due to delivery of the alarm. Therefore, it needs to consider how to coordinate the protection and recovery of the networks of the client layer and the service layer, so as to ensure that the services are recovered reliably and the services will not fail many times.

In current operator networks, a static coordination method is generally used, i.e., delay timers are started in different layers for coordination. In this manner, the client layer cannot learn whether the protection and recovery of the service layer has failed, and after the delay timer expires, it is decided whether to start the protection and recovery by searching for whether there is an alarm in the client layer again. Therefore, in a case that the protection and recovery of the service layer is invalid, if the client layer waits for the delay all the time, it will result in the time of service failure being lengthened. At the same time, in the current networks, inter-layer coordination is mostly applied in the same type of devices, and dynamic coordination of protection and recovery across domains is in a research phase.

For the above problems in the related art, there is no effective solution proposed currently. Document, ZIYING CHEN: "The LSP protection/restoration mechanism in GMPLS", INTERNET CITATION, October 2002, XP002239552, discloses a switching technology Generalised Multiprotocol Label Switching (GMPLS) and traffic engineering.

### Summary of the Invention

The invention is defined by a method according to claim 1 and a system according to claim 7. Further embodiments are defined by the dependent claims. For the problems in the related technologies that the client layer cannot learn whether the protection and recovery of the service layer has failed thereby resulting in the time of service failure being lengthened, the present invention provides a method and apparatus for transmitting inter-domain fault information, to at least solve the above problems.

In an aspect of the present invention, a method for transmitting inter-domain fault information is provided, having the features of claim 1.

After the step of the service layer LSP transmitting inter-domain fault information to a client layer LSP of the service layer LSP, the method further comprises:
the client layer LSP protecting or recovering the service layer LSP; and
when the protection or recovery of the service layer LSP by the client layer LSP fails, the client layer LSP continuing to transmit the inter-domain fault information to the client layer LSP of the client layer LSP.

The step of the client layer LSP protecting or recovering the service layer LSP comprises:
the client layer LSP establishing a new connection according to the inter-domain fault information, and switching services of the client layer LSP to the new connection.

The method further comprises:
when a fault indicated by the inter-domain fault information disappears, the service layer LSP transmitting an inter-domain fault disappearance message to the client layer LSP, wherein, the inter-domain fault disappearance message is used for indicating that the fault indicated by the inter-domain fault information disappears.

After the step of the service layer LSP transmitting an inter-domain fault disappearance message to the client layer LSP, the method further comprises:
the client layer LSP receiving the inter-domain fault disappearance message, and judging whether to switch the services of the client layer LSP back to the connection of the service layer LSP according to pre-configuration; and if yes, switching the services of the client layer LSP back to the connection of the service layer LSP.

The step of a service layer LSP determining that the protection or recovery of the service layer LSP is invalid comprises:
when a connection of the service layer LSP has a fault or the service layer LSP receives the inter-domain fault information, the service layer LSP protecting or recovering the service layer LSP, and when the protection or recovery of the service layer LSP fails, the service layer LSP determining that the protection or recovery of the service layer LSP is invalid.

The method further comprises:
when the connection of the service layer LSP has a fault, the client layer LSP starting a preconfigured delay timer; and
if the client layer LSP receives the inter-domain fault information transmitted by the service layer LSP before the delay timer expires, the client layer LSP stopping the delay timer and protecting or recovering the service layer LSP.

The step of the service layer LSP transmitting inter-domain fault information to a client layer LSP of the service layer LSP comprises:
a first node transmitting the inter-domain fault information to a second node, wherein the first node is a head node of the service layer LSP, and the second node is a head node of the client layer LSP.

The inter-domain fault information comprises a location of the fault and/or a type of the fault.

In another aspect of the present invention there is provided a system having the features of claim 7.

The system may comprise:
a protection and recovery module, configured to protect or recover the service layer LSP when a connection of the service layer LSP has a fault or the service layer LSP receives the inter-domain fault information.

With the present invention, a service layer LSP determines that the protection or recovery of the service layer LSP is invalid, and the service layer LSP transmits inter-domain fault information to a client layer LSP of the service layer LSP, to indicate that the protection or recovery of the service layer LSP is invalid, to allow the client layer LSP to learn in time that the protection or recovery of the service layer LSP has failed, so that the client layer LSP protects or recovers the service layer LSP in time, shortening the time of end-to-end service failure, and improving the network survivability.

### Brief Description of Drawings

The accompanying drawings described herein are used to provide a better understanding of the present invention and constitute a part of this application, and the schematic embodiments of the present invention and the descriptions thereof are used to explain the present invention and do not constitute an improper definition of the present invention. In the accompanying drawings:
Fig. 1 is a flowchart of a method for transmitting inter-domain fault information according to an embodiment of the present invention;
Fig. 2 is an apparatus for transmitting inter-domain fault information according to an embodiment of the present invention;
Fig. 3 is a flowchart of a method for dynamic coordination of protection and recovery of multi-layer multi-domain networks according to an embodiment of the present invention;
Fig. 4 is a diagram of an architectural system for dynamic coordination in multi-layer multi-domain networks according to a specific embodiment of the present invention;
Fig. 5 is a diagram of three-layer connection of a service layer of multi-layer multi-domain networks according to an embodiment of the present invention;
Fig. 6 is a diagram of example one of dynamic coordination after a service layer of multi-layer multi-domain networks fails according to an embodiment of the present invention; and
Fig. 7 is a diagram of example two of dynamic coordination after a service layer of multi-layer multi-domain networks fails according to an embodiment of the present invention.

### Preferred Embodiments of the Present Invention

The present invention will be described in detail below with reference to accompanying drawings and in conjunction with embodiments. It should be illustrated that without conflict, the embodiments in the present application and features in the embodiments can be combined with each other.

For the problems in the multi-layer multi-domain networks that the client layer cannot learn in time whether the protection and recovery of the service layer has failed thereby resulting in the time of service failure being lengthened, the embodiments of the present invention provide a method and apparatus for transmitting inter-domain fault information, which transmits inter-domain fault information in real time, so that the client layer can dynamically learn whether the protection and recovery of the service layer is successful in real time, and when the protection and recovery of the service layer has failed, protects or recovers the service connection in time, shortening the time of end-to-end service failure, and improving the network survivability.

### Embodiment one

In an embodiment of the present invention, a method for transmitting inter-domain fault information is provided, which achieves transmitting inter-domain fault information to an upper layer (client layer) LSP when protection or recovery of a lower layer (service layer) LSP is invalid, so that the upper layer LSP protects or recovers the service connection according to the inter-domain fault information.

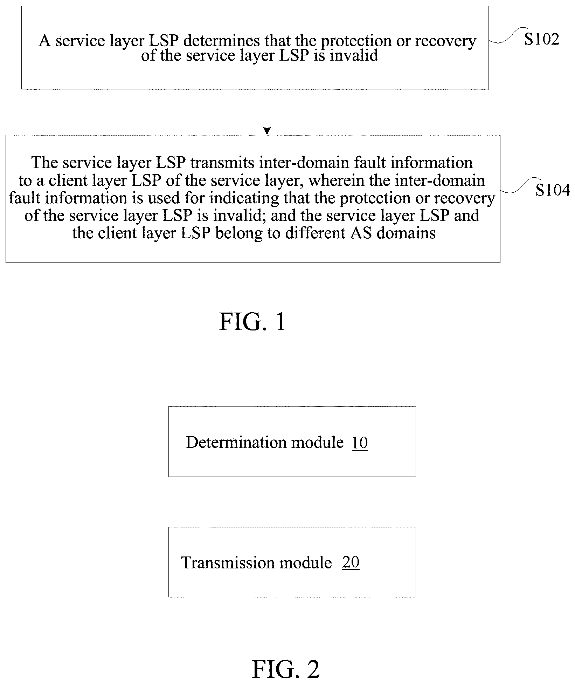

Fig. 1 is a flowchart of a method for transmitting inter-domain fault information according to an embodiment of the present invention. As shown in Fig. 1, the method may include steps S102 to S104:
in step 102, a service layer LSP determines that the protection or recovery of the service layer LSP is invalid; and
In step S104, the service layer LSP transmits inter-domain fault information to a client layer LSP of the service layer, wherein the inter-domain fault information is used for indicating that the protection or recovery of the service layer LSP is invalid; and the service layer LSP and the client layer LSP belong to different AS domains.

With the embodiments of the present invention, a service layer LSP determines that the protection or recovery of the service layer LSP is invalid, and the service layer LSP transmits inter-domain fault information to a client layer LSP of the service layer LSP, to indicate that the protection or recovery of the service layer LSP is invalid, to allow the client layer LSP to learn in time that the protection or recovery of the service layer LSP has failed, so that the client layer LSP protects or recovers the service layer LSP in time, shortening the time of end-to-end service failure, and improving the network survivability.

In the embodiments of the present invention, when a fault occurs in a network of a service layer or the service layer LSP receives inter-domain fault information, the service layer LSP may start a protection or recovery function, to protect or recover the service layer LSP, and when the protection or recovery has failed, the service layer LSP determines that the protection or recovery of the service layer LSP is invalid. When it is determined that the protection or recovery is invalid, inter-domain fault information may be transmitted to an upper layer LSP (i.e., a client layer LSP of the service layer LSP), to indicate that the protection or recovery of the service layer LSP is invalid, so that the upper layer LSP acquires in time that the protection or recovery of the lower layer LSP is invalid, and protects or recovers the lower layer LSP. As the upper layer LSP learns more comprehensive link information, it can quickly protect or recover the lower layer LSP. In a preferable implementation of the embodiments of the present invention, the inter-domain fault information may include information such as a location of a fault and a type of the fault.

In a preferable implementation of the embodiments of the present invention, after the service layer LSP transmits the inter-domain fault information to the client layer LSP, the client layer LSP may protect or recover the service layer LSP. When the protection or recovery of the service layer LSP by the client layer LSP has failed, the client layer LSP may transmit the inter-domain fault information to the upper layer LSP (for an upper layer LSP of the client layer, the client layer is used as a service layer to provide services to the upper layer LSP) of the client layer LSP. With the preferable implementations, when the protection or recovery of the lower layer LSP has failed, the lower layer LSP transmits inter-domain fault information to an upper layer LSP in multi-layer multi-domain networks, to allow the upper layer LSP to learn in time that the protection or recovery of the upper layer LSP has failed, shortening the time of end-to-end service failure, and improving the service stability.

Further, when the client layer LSP protects or recovers the service layer LSP, a new connection may be established according to the inter-domain fault information, and the services of the client layer LSP are switched to the newly established connection. For example, when the client layer LSP is configured to optimize rerouting, the client layer LSP may generate s recovery path according to the inter-domain fault information, and switch the end-to-end services of the client layer LSP to a newly established connection. After the client layer LSP switches the services to the new connection, the inter-domain fault information may be stopped to be transmitted to the upper layer LSP of the client layer LSP.

In a preferable implementation of the embodiments of the present invention, when the fault indicated by the inter-domain fault information disappears, the service layer LSP may transmit the inter-domain fault disappearance message to the client layer LSP, wherein, the inter-domain fault disappearance message is used for indicating that the fault indicated by the inter-domain fault information disappears. After the upper layer LSP receives the inter-domain fault disappearance message, the connection of the services of the layer LSP may be selected dynamically according to practical requirements. Preferably, after the service layer LSP transmits the inter-domain fault disappearance message to the client layer LSP, wherein, the inter-domain fault disappearance message is used for indicating that the fault indicated by the inter-domain fault information disappears. The client layer LSP may receive the inter-domain fault disappearance message, and judge whether to switch the services of the client layer LSP back to the connection of the service layer LSP according to pre-configuration, and if yes, switch the services of the client layer LSP back to the connection of the service layer LSP.

In the related technologies, in order to improve survivability of the device, protection and recovery may be deployed in different networks, and when a certain network fails, not only the protection and recovery of the local layer will be triggered, but also services of a client layer will also receive an alarm due to delivery of the alarm, and the client layer starts a delay timer, and when the delay timer expires, it is decided whether to start the protection and recovery by searching for whether there is an alarm in the client layer again. In a case that the protection and recovery of the service layer is invalid, if the client layer waits for the delay all the time, it will result in the time of service failure being lengthened. In a preferable implementation of the embodiments of the present invention, in order to be compatible with the method for a delay timer, when the service layer network has a fault, a second node may start a preconfigured delay timer, wherein, wherein, the second node is a head node of the client layer LSP, and if the client layer LSP receives the inter-domain fault information transmitted by the service layer LSP before the delay timer expires, the second node may stop the delay timer, and protects or recovers the service layer LSP.

There are multiple nodes included on the LSP connection, and when one node on the LSP connection fails, the inter-domain fault information may be transmitted by other nodes to the upper layer LSP. In a preferable implementation of the embodiments of the present invention, when the service layer LSP transmits inter-domain fault information to the client layer LSP, the inter-domain fault information may be transmitted by the first node to the second node, wherein, the first node is a head node of the service layer LSP, and the second node is a head node of the client layer LSP. In practical applications, the inter-domain fault information may also be transmitted to the node of the upper layer LSP via delivery between nodes, to be processed by corresponding nodes.

In an embodiment of the present invention, an apparatus for transmitting inter-domain fault information is also provided, to achieve the above method according to an embodiment of the present invention.

Fig. 2 is an apparatus for transmitting inter-domain fault information according to an embodiment of the present invention. As shown in Fig. 2, the apparatus primarily includes a determination module 10 and a transmission module 20. Wherein, the determination module 10 is configured to determine that the protection or recovery of the service layer LSP is invalid; and the transmission module 20 is coupled with the determination module 10, and is configured to transmit inter-domain fault information to a client layer LSP of the service layer LSP, wherein the client layer LSP is an upper layer LSP of the service layer LSP, and the inter-domain fault information is used for indicating that the protection or recovery of the service layer LSP is invalid; and the service layer LSP and the client layer LSP belong to different AS domains.

With the embodiments of the present invention, the determination module 10 determines that the protection or recovery of the service layer LSP fails, and the transmission module 20 transmits inter-domain fault information to an upper layer (client layer) LSP of the service layer LSP, to indicate that the protection or recovery of the service layer LSP fails, to allow the client layer LSP to learn in time that the protection or recovery of the service layer LSP has failed, and the client layer LSP protects or recovers the service layer LSP in time, shortening the time of end-to-end service failure, and improving the network survivability.

In a preferable implementation of the embodiments of the present invention, the determination unit 10 may determine that the protection or recovery of the service layer LSP fails according to the following mode: the protection and recovery module protecting or recovering the service layer LSP when a connection of the service layer LSP has a fault or the service layer LSP receives the inter-domain fault information, and the determination module 10 determining that the protection or recovery of the service layer LSP is invalid when the protection or recovery of the service layer LSP has failed. Preferably, the apparatus may further comprise a protection and recovery module, configured to protect or recover the service layer LSP when a connection of the service layer LSP has a fault or the service layer LSP receives the inter-domain fault information.

### Embodiment two

According to an embodiment of the present invention, a system for dynamic coordination of protection and recovery of multi-layer multi-domain networks is provided. At the same time, on basis of the system, a method for dynamic coordination of protection and recovery of multi-layer multi-domain networks is provided. With real-time delivery of inter-domain fault information, the problems in the multi-layer multi-domain networks that the client layer cannot learn in real time whether the protection and recovery of the service layer is successful, shortening the time of end-to-end service failure, and improving the network survivability.

The method for dynamic coordination of protection and recovery of multi-layer multi-domain networks according to the preferable embodiment comprises the following several steps (steps 1-3):
In step one, after a service layer network has a fault, a head node in the local network starts inter-domain fault detection, to detect and judge whether the protection or recovery of the local layer LSP is invalid;
in step two, after the head node of the service layer judges that the protection and recovery of the local layer have failed, it generates inter-domain fault information, and delivers the inter-domain fault information to the upstream through an LSP path; and
In step three, when a head node of the upper layer network LSP (client layer) detects the inter-domain fault, it judges whether the local layer needs to start protection or recovery, and when the protection or recovery is successful, it terminates the delivery of the inter-domain fault information; and when the protection or recovery has failed, it continues to deliver the inter-domain fault information to the upper layer.

In the above steps, in order to be compatible with a traditional static protection coordination mechanism, in step one, when the head node of the client layer detects the LSP fault, it may also start a timer at the same time; and in step three, when the head node of the client layer receives the inter-domain fault, it terminates the timer started in step one.

The above steps one and two correspond to the steps S102 and S104 in the above embodiments of the present invention, to achieve transmission of the inter-domain fault information to the upper layer LSP when the protection or recovery of the local layer has failed.

The system for dynamic coordination of protection and recovery of multi-layer multi-domain networks according to the preferable embodiment primarily comprises a network detector (corresponding to the determination module 10 in the above embodiment of the present invention), which is located on a domain boundary node, and configured to detect whether the protection or recovery in the local domain is invalid after the fault occurs; an inter-domain fault information processor (corresponding to the transmission module 20 in the above embodiment of the present invention), which is located on a domain boundary node and configured to generate fault information after the protection and recovery have failed, and deliver the generated inter-domain fault information to the upper layer LSP; and a recovery trigger (corresponding to the protection and recovery module in the above embodiment of the present invention), which is located on a domain boundary node and configured to decide to perform protection and recovery of the client layer after receiving the inter-domain fault information.

With the preferable embodiment, after the protection and recovery of the service layer network have failed, the client layer may not wait for the expiration of the delay timer, and start the protection and recovery of the client layer immediately after receiving the inter-domain fault information, shortening the time of end-to-end service failure, making full of network resources and improving the survivability of the bearer networks.

### Embodiment three

There are many types of bearer devices in the communication networks, and various types of devices belong to different layers respectively. These devices may be located in different regions, and therefore are distributed in different router domains. In order to solve the problems of cross-domain end-to-end LSP establishment, the IETF publishes a series of standards to extend the RSVP-TE, in which there are two solutions, one is Hierarchy-LSP (H-LSP for short) and the other is Stitching-LSP (S-LSP for short).
1) The H-LSP is an LSP created by means of hierarchy. I.e., the H-LSP (which is defined as FA-LSP by the RFC4206) may form a TE link on an upper layer (client layer) thereof; and the establishment of the upper layer LSP may use the TE link for route calculation. The H-LSP, as a service layer, may be used by many client layer LSPs.
2) The S-LSP is the LSP created by means of Stiching. I.e., the S-LSP may flood as an LSP on the same layer, and the Stiching technology requires that the interface exchange capabilities of various LSP segments must be the same. When the cross-domain end-to-end LSP connection is established by Stiching, the S-LSP can be stiched by only one LSP at most.

The H-LSP and the S-LSP may be dynamically triggered to pre-established successfully.

When the above technology is used, different LSPs are used on the end-to-end LSP, and protection and recovery may be configured on different LSPs. The specific embodiment of the present invention is described by taking an H-LSP as an example, but the embodiment of the present invention is not limited to this mode.

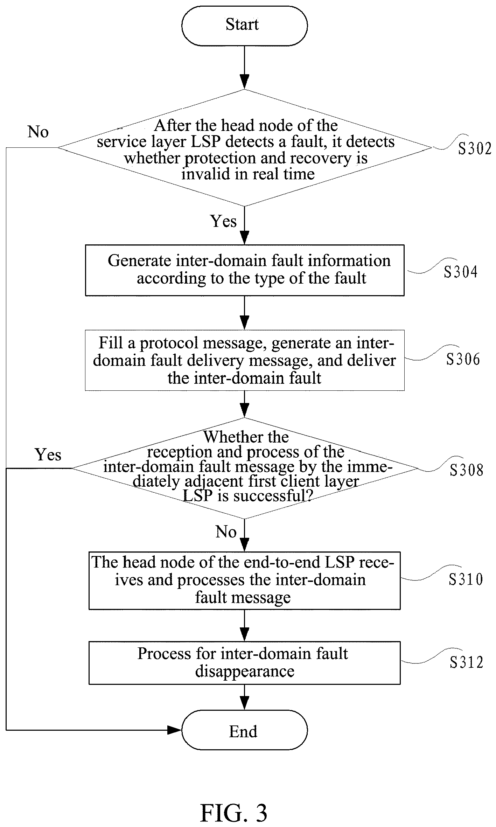

Fig. 3 is a flowchart of a method for dynamic coordination of protection and recovery of multi-layer multi-domain networks according to an embodiment of the present invention. As shown in Fig. 3, the method may include the following steps S302 to S312.

In step S302, the inter-domain fault is detected.

Before the inter-domain fault is detected, when the upper layer LSP is established, the Path message needs to carry a NOTIFY_REQUEST object. The object records an IP address of a head node of the upper layer LSP. After the head node of the FA-LSP receives the Path message of the upper layer, it needs to record the IP address as a destination address to which the inter-domain fault information is transmitted.

Reasonable delay timers are needed to be set for the various layer LSPs which are configured with protection and recovery. The delay timer of the upper layer network at the lowest layer is set as T1, the delay timer of the upper layer network at the second layer is set as 2*T1, and the delay timer of the upper layer network at the third layer is set as 3*T1, and so on, to set the delay timers of various service layers completely.

After the LSP, as a service layer, has a fault, the head node needs to detect and judge whether the protection or recovery of the local layer fails, and if yes, the subsequent processes are performed;
in step 304, after the head node of the service layer LSP learns that the protection or recovery in the local domain fails, fault information is generated. The fault information may include a location of the fault, and a type of the fault.

The location of the fault includes a fault of the FA-LSP, and a fault of the head node of the FA-LSP. The type of the fault is a type of the physical fault occurring in the FA-LSP. The fault of the FA-LSP refers to that the FA-LSP per se is not configured with a protection and recovery attribute. The fault of the head node of the FA-LSP refers to that the FA-LSP per se is configured with the protection or recovery attribute, but due to reasons such as lack of resources etc., the protection or recovery fails.

In step S306, the inter-domain fault information is generated. At a point where the inter-domain fault occurs, i.e., the head node of the FA-LSP of which the protection or recovery fails, the generated inter-domain fault information is set in the inter-domain delivery information, and the filled information includes a type of the fault and a location of the fault, the destination address is set as the IP address stored in the step S302 to transmit inter-domain fault information.

In step 308, after the head node of the upper layer LSP receives the inter-domain fault information, it terminates the delay timer started by the local layer, and judges whether the protection and recovery can be started. After the protection and recovery are successful, the delivery of the inter-domain fault information is terminated; and when the protection and recovery fail, the steps S304 and S306 are repeated, to continue to generate the inter-domain fault information and deliver the inter-domain fault information to the upstream.

In step S310, after the head node of the end-to-end LSP receives the inter-domain fault information, it terminates the delay timer started by the local layer, and recovers the end-to-end services globally according to the protection or recovery configured by the end-to-end LSP.

In the above steps, when a certain layer LSP is configured to optimize rerouting, the head node needs to deliver the fault information to a route calculation unit, such as a PCE, and receive a route result from the route calculation unit to generate a recovery path, and switch the end-to-end services to the newly established connection.

Preferably, the method according to an embodiment of the present invention may further comprise step S312.

In step S312, after the fault disappears, the head node in step S304 needs to generate inter-domain fault disappearance information, and deliver the information to the upstream, and the delivery path and the delivery method are the same as those for the fault information.

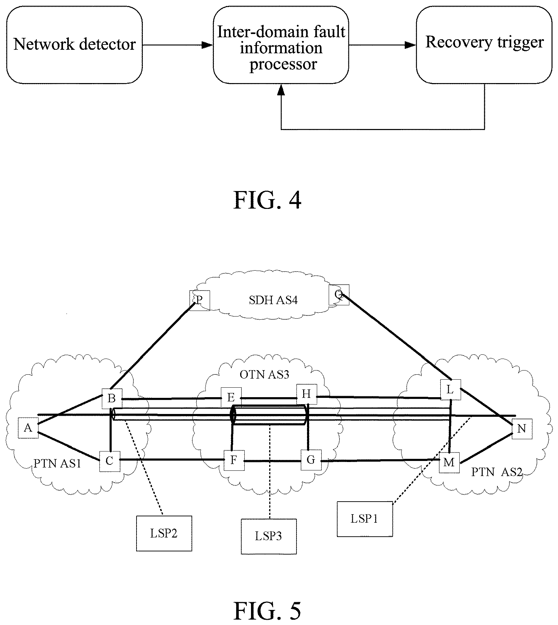

Fig. 4 is a diagram of an architectural system for dynamic coordination in multi-layer multi-domain networks according to a specific embodiment of the present invention. As shown in Fig. 4, the system primarily comprises a network detector (corresponding to the determination module 10 in the above embodiment of the present invention); an inter-domain fault information processor (corresponding to the transmission module 20 in the above embodiment of the present invention); and a recovery trigger (corresponding to the protection and recovery module in the above embodiment of the present invention). The above three modules are located on a domain boundary node, to cooperate to complete dynamic coordination of inter-domain protection or recovery.

The network detector is configured to detect whether the protection or recovery of the local layer fails when a fault occurs in the local layer or when the fault of the local layer is caused by a fault of the service layer; and in the same layer, there may be configured with many protection and recovery methods, for example, many methods for protecting services such as end-to-end protection and dynamic rerouting of the local layer and MPLS FRR and dynamic rerouting etc. When the network trigger makes a decision, it needs to consider whether all protection and recovery configured in the same layer are started and fail. When it is detected that the services of the local layer cannot be recovered, the information is delivered to the inter-domain fault information processor. At the same time, the network detector is further configured to collect the information of the head node of the upper layer LSP (service layer FA-LSP), i.e., an IP address, and this information is delivered when the upper layer LSP triggers the establishment of the local layer LSP.

The inter-domain fault information processor is configured to generate inter-domain fault information after receiving the protection and recovery fault information of the local layer transmitted by the network detector. The fault information may include a location of the fault and a type of the fault etc. After the fault information is generated, the type of the fault, the position of the fault and a destination address may be set in a notify message for transmission. The inter-domain fault information processor may further receive the inter-domain fault information transmitted by the service layer directly from a protocol layer, and may deliver the received inter-domain fault information to the recovery trigger.

The recovery trigger is configured to judge whether the protection or recovery of the local layer is started after receiving the inter-domain fault information of the service layer. The recovery trigger is located at the head node of the client layer LSP, and needs to decide which way to start to recover the services according to the type of the protection and recovery configured by the local layer. When dynamic rerouting is started, it needs to generate the corresponding routing strategy according to the inter-domain fault information and deliver the routing strategy to a route calculation unit, and then obtain a result returned by the route calculation unit. The head node of the upper layer LSP can more comprehensively consider how to recover the services as it has more comprehensive routing topology information and an end-to-end configuration.

Fig. 5 is a diagram of three-layer connection of a service layer of multi-layer multi-domain networks according to an embodiment of the present invention. The network as shown in Fig. 5 is comprised of four AS domains, wherein, AS1 and AS2 are PTN networks, AS3 is an Optical Transport Network (OTN), and AS4 is an SDH network. The end-to-end LSP connection is from an A node of the AS1 to an N node of the AS2, i.e., LSP1. There are two service layer LSPs. One layer is from a boundary node B of the AS1 to a boundary node L of the AS2, i.e., LSP2, and the other layer is an intra-domain LSP in the OTN network AS3, which is from an E node of the AS3 to an H node of the AS3, i.e., LSP3. For the LSP2, it is a service layer LSP of the LSP1, and is also a client layer LSP of the LSP3. The method for establishing three-layer LSP will not be described in detail in the embodiment of the present invention.

In the network illustrated in Fig. 5, the LSP1 is configured with dynamic recovery, the LSP2 is an LSP without protection and recovery, and the LSP3 is configured with dynamic recovery. The delay of the head node of the LSP2 is set as T, and the delay of the head node of the end-to-end LSP, i.e., the LSP1 is set as 2T.

In the process of establishing the three layer LSPs, the head node B of the LSP2 records that the destination address to which the inter-domain fault is transmitted is an IP address of the head node of the upper layer LSP, i.e., an IP address of the node A; and the head node E of the LSP3 records that the destination address to which the inter-domain fault is transmitted is an IP address of the head node of the upper layer LSP, i.e., an IP address of the node B.

In the three layer LSPs according to an embodiment of the present invention, the dynamic trigger of the service layer LSP by the client layer is taken as an example. When the pre-establishment of the service layer LSP is successful, after the upper layer LSP selects a suitable service layer LSP, it also needs to record the IP address of the head node of the upper layer LSP.

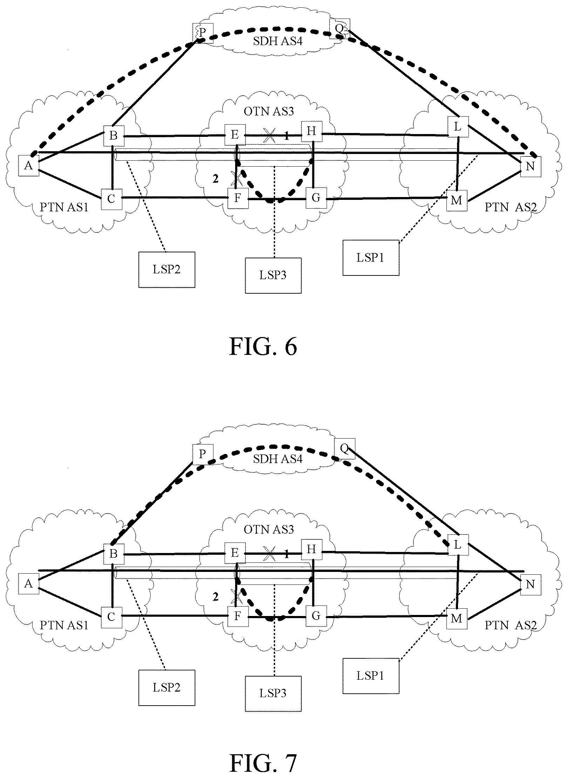

Fig. 6 is a diagram of example one of dynamic coordination after a service layer of multi-layer multi-domain networks fails according to an embodiment of the present invention. As shown in Fig. 6, after a fault occurs in the service layer, an immediately adjacent client layer LSP is not configured with a protection and recovery attribute, and the fault continues to be delivered to an end-to-end head node.

When a fiber cut fault (fault 1) occurs between the E-H of the OTN network, after the LSP3 receives the SF fault, it starts optimization of rerouting, to find a recovery connection in the local domain of the local layer, as shown in Fig. 6. At this time, the head node E of the LSP3 detects that there is no inter-domain fault.

When a fiber cut fault (fault 2) occurs between the E-F of the recovery connection path of the OTN network again, after the LSP3 receives the second SF fault, a new recovery connection cannot be found in the local domain of the local layer, and at this time, the head node E of the LSP3 detects that an inter-domain fault occurs.

The node E generates inter-domain fault information: the node E writes the fault of the node in the Notify message, writes the IP address of the node B in the notify, and transmits the notify message.

At this time, as a fault occurs in the service layer, the head nodes of various client layers will receive the fault, and the head nodes of various client layers start the delay timers according to the configured delay. The node B starts a timer with a start time of T and the node A starts a timer with a start time of 2T.

After the node B receives the inter-domain fault information transmitted by the node E, it terminates the delay timer of the local layer, changes the Notify message, writes the IP address of the node A in the notify, and transmits the notify message.

After the head node A of the end-to-end LSP receives the inter-domain fault information, it terminates the delay timer of the local layer, delivers the information that the node E fails to the route calculation unit, receives a result returned by the route calculation unit, then establishes a recovery connection via the AS4 domain, and switches the services to the recovery connection. The process of how the recovery connection triggers the multi-layer LSP establishment is not within the scope of the present invention.

Preferably, after the fault in the AS3 domain disappears, the node E generates the notification message that the inter-domain fault disappears and delivers the notification message to the upstream. After the node A receives the information that the inter-domain fault disappears, it decides to switch the services back to the original connection.

Fig. 7 is a diagram of example two of dynamic coordination after a service layer of multi-layer multi-domain networks fails according to an embodiment of the present invention. As shown in Fig. 7, after a fault occurs in the service layer, an immediately adjacent client layer LSP is not configured with a dynamic reroute, and the fault is recovered in this layer.

When a fiber cut fault occurs between both the E-H and the E-F of the OTN network, a new recovery connection cannot be found in the local domain of the local layer, and at this time, the head node E of the LSP3 detects that an inter-domain fault occurs.

The node E generates inter-domain fault information: the node E writes the fault of the node and an IP address of the node B in the notify, and transmits the notify message.

After the node B receives the inter-domain fault information transmitted by the node E, it detects that the local layer LSP is configured with a dynamic reroute, delivers information that the node E fails to a route calculation unit, receives a result of the route calculation, then establishes a recovery connection via the SDH AS4 domain, and switches the services to the recovery connection. The inter-domain fault will not continue to be uploaded.

Preferably, after the fault in the AS3 domain disappears, the node E generates a notification message that the inter-domain fault disappears, and delivers the notification message to the upstream. After receiving the information that the inter-domain fault disappears, the node B decides to switch the services back to the original connection again, and deletes the established recovery connection.

It can be seen from the above description that the present invention achieves the following technical effects: the service layer LSP determines that the protection or recovery of the service layer LSP fails, and transmits inter-domain fault information to the upper layer LSP of the service layer LSP, to indicate that the protection or recovery of the service LSP fails. With real-time delivery of inter-domain fault information, the client layer can dynamically learn in real time whether the protection or recovery of the service layer is successful, and when the protection or recovery of the service layer fails, the client layer protects or recovers the service connection in time, shortening the time of end-to-end service failure, and improving the network survivability.

Obviously, those skilled in the art should understand that each module or each step of the aforementioned present invention can be implemented with general computing devices, and can be integrated on a single computing device, or distributed onto a network consisting of a plurality of computing devices; alternatively, they can be implemented with program codes executable by the computing devices, and therefore, they can be stored in storage devices to be executed by the computing devices; and in some cases, the steps illustrated or described may be performed in an order different from that described here, alternatively, they are respectively made into a plurality of integrated circuit modules; alternatively, it is implemented with making several modules or steps of them into a single integrated circuit module. Thus, the present invention is not limited to any specific combinations of hardware and software.

### Industrial Applicability

Compared with the related technologies, the present invention allows a client layer LSP to learn in time that the protection or recovery of a service layer LSP has failed, so that the client layer LSP protects or recovers the service layer LSP in time, shortening the time of end-to-end service failure, and improving the network survivability.

## Claims

1. A method for transmitting inter-domain fault information, comprising:
upon a connection of a service layer Label Switched Path, LSP, having a fault or upon the service layer LSP receiving inter-domain fault information, a head node of the service layer LSP starting inter-domain fault detection to detect (S302) and judge whether a protection or recovery of the service layer LSP fails;
upon judging by the head node of the service layer LSP that the protection and recovery of the service layer LSP have failed, the head node of the service layer LSP transmitting (S104, S306) inter-domain fault information to a head node of a client layer LSP of the service layer LSP; wherein the inter-domain fault information is used for indicating that the protection or recovery of the service layer LSP has failed;
upon the connection of the service layer LSP having a fault, the head node of the client layer LSP starting a preconfigured delay timer for starting protection or recovery; and
upon the head node of the client layer LSP receiving the inter-domain fault information transmitted by the service layer LSP before the delay timer expires, the client layer LSP stopping the delay timer, and protecting or recovering the service layer LSP;
wherein the service layer LSP and the client layer LSP belong to different Autonomous System, AS, domains.

2. The method according to claim 1, after the step of the service layer LSP transmitting (S104, S306) inter-domain fault information to a head node of a client layer LSP of the service layer LSP, the method further comprising:
the client layer LSP protecting or recovering the service layer LSP; and
when the protection or recovery of the service layer LSP by the client layer LSP fails, the client layer LSP continuing to transmit the inter-domain fault information to a client layer LSP of the client layer LSP.

3. The method according to claim 2, wherein the step of the client layer LSP protecting or recovering the service layer LSP comprises:
the client layer LSP establishing a new connection according to the inter-domain fault information, and switching services of the client layer LSP to the new connection.

4. The method according to claim 1, further comprising:
when a fault indicated by the inter-domain fault information disappears, the service layer LSP transmitting an inter-domain fault disappearance message to the client layer LSP, wherein the inter-domain fault disappearance message is used for indicating that the fault indicated by the inter-domain fault information disappears.

5. The method according to claim 4, after the step of the service layer LSP transmitting an inter-domain fault disappearance message to the client layer LSP, the method further comprising:
the client layer LSP receiving the inter-domain fault disappearance message, and judging whether to switch services of the client layer LSP back to a connection of the service layer LSP according to pre-configuration; and if yes, switching the services of the client layer LSP back to the connection of the service layer LSP.

6. The method according to any of claims 1-5, wherein the inter-domain fault information comprises a location of the fault and/or a type of the fault.

7. A system comprising a head node of a service layer Label Switched Path, LSP, and a head node of a client layer LSP, wherein said system is adapted to perform the method of claim 1.

## Patentansprüche

1. Verfahren zum Senden von Informationen über domänenübergreifende Fehler, wobei das Verfahren umfasst:
wenn die Verbindung eines Dienst-Schicht-Label-Switched-Path (LSP) einen Fehler aufweist oder wenn der Dienst-Schicht-LSP Informationen über domänenübergreifende Fehler empfängt, Beginnen einer Erfassung domänenübergreifender Fehler, durch einen Hauptknoten des Dienst-Schicht-LSP, zur Erfassung (S302) und Beurteilung, ob ein Schutz oder Wiederherstellen des Dienst-Schicht-LSP fehlschlägt;
wenn durch den Hauptknoten des Dienst-Schicht-LSP geurteilt wird, dass der Schutz und die Wiederherstellung des Dienst-Schicht-LSP fehlgeschlagen sind, Senden (S104, S306), durch den Hauptknoten des Dienst-Schicht-LSP, von Informationen über domänenübergreifende Fehler an einen Hauptknoten eines Klienten-Schicht-LSP des Dienst-Schicht-LSP; wobei die Informationen über domänenübergreifende Fehler verwendet werden, um anzuzeigen, dass der Schutz oder die Wiederherstellung des Dienst-Schicht-LSP fehlgeschlagen ist;
wenn die Verbindung des Dienst-Schicht-LSP einen Fehler aufweist, Beginnen eines vorkonfigurierten Verzögerungstimers, durch den Hauptknoten des Dienst-Schicht-LSP, um den Schutz oder die Wiederherstellung zu beginnen; und
wenn der Hauptknoten des Klienten-Schicht-LSP die von dem Dienst-Schicht-LSP gesendeten Informationen über domänenübergreifende Fehler empfängt, bevor der Verzögerungstimer abgelaufen ist, Anhalten des Verzögerungstimers durch den Klienten-Schicht-LSP und Schützen oder Wiederherstellen des Dienst-Schicht-LSP;
wobei der Dienst-Schicht-LSP und der Klienten-Schicht-LSP zu Domänen von unterschiedlichen autonomen Systemen (AS) gehören.

2. Verfahren gemäß Anspruch 1, wobei nach dem Schritt des Sendens (S104, S306), durch den Hauptknoten des Dienst-Schicht-LSP, von Informationen über domänenübergreifende Fehler an einen Hauptknoten einer Klienten-Schicht-LSP des Dienst-Schicht-LSP, das Verfahren weiterhin umfasst:
Schützen oder Wiederherstellen des Dienst-Schicht-LSP durch den Klienten-Schicht-LSP; und
wenn der Schutz oder die Wiederherstellung des Dienst-Schicht-LSP durch den Klienten-Schicht-LSP fehlschlägt, weiterhin Senden der Informationen über domänenübergreifende Fehler, durch den Klienten-Schicht-LSP, an einen Klienten-Schicht-LSP des Klienten-Schicht-LSP.

3. Verfahren gemäß Anspruch 2, wobei der Schritt des Schützens oder Wiederherstellens des Dienst-Schicht-LSP durch den Klienten-Schicht-LSP umfasst:
Aufbauen, durch den Klienten-Schicht-LSP, einer neuen Verbindung gemäß den Informationen über domänenübergreifende Fehler, und Umschalten von Diensten des Klienten-Schicht-LSP auf die neue Verbindung.

4. Verfahren gemäß Anspruch 1, das weiterhin umfasst:
wenn ein Fehler, den die Informationen über domänenübergreifende Fehler angezeigt haben, verschwindet, Senden, durch den Dienst-Schicht-LSP, einer Nachricht über das Verschwinden des domänenübergreifenden Fehlers an den Klienten-Schicht-LSP, wobei die Nachricht über das Verschwinden des domänenübergreifenden Fehlers verwendet wird, um anzuzeigen, dass der Fehler, den die Informationen über domänenübergreifende Fehler angezeigt haben, verschwunden ist.

5. Verfahren gemäß Anspruch 4, wobei nach dem Schritt des Sendens, durch den Dienst-Schicht-LSP, der Nachricht über das Verschwinden des domänenübergreifenden Fehlers an den Klienten-Schicht-LSP das Verfahren weiterhin umfasst:
Empfangen, durch den Klienten-Schicht-LSP, der Nachricht über das Verschwinden des domänenübergreifenden Fehlers und Beurteilen, ob die Dienste des Klienten-Schicht-LSP zurück umgeschaltet werden sollen auf eine Verbindung des Dienst-Schicht-LSP gemäß einer vorherigen Konfiguration; und wenn ja, Umschalten der Dienste des Klienten-Schicht-LSP zurück auf die Verbindung des Dienst-Schicht-LSP.

6. Verfahren gemäß einem der Ansprüche 1 bis 5, wobei die Informationen über domänenübergreifende Fehler eine Position des Fehlers und/oder die Art von Fehler umfassen.

7. System, das umfasst: einen Hauptknoten eines Dienst-Schicht-Label-Switched-Path (LSP), und einen Hauptknoten eines Klienten-Schicht-LSP, wobei das System dazu ausgelegt ist, das Verfahren gemäß Anspruch 1 durchzuführen.

## Revendications

1. Procédé d'émission d'informations de défaillance inter-domaine, dans lequel :
en cas d'une connexion défaillante de la voie à commutation par étiquettes (LSP, Label Switched Path) d'une couche de service ou lors de la réception, par la LSP de la couche de service, d'informations de défaillance inter-domaine, un noeud de tête de la LSP de la couche de service entame une détection de défaillance inter-domaine pour détecter (S302) et juger si une protection ou une récupération de la LSP de la couche de service a échoué,
si le noeud de tête de la LSP de la couche de service a jugé que la protection et la récupération de la LSP de la couche de service ont échoué, le noeud de tête de la LSP de la couche de service émet (S104, S306) des informations de défaillance inter-domaine auprès d'un noeud de tête de la LSP d'une couche client de la LSP de la couche de service ; lesdites informations de défaillance inter-domaine servant à indiquer que la protection ou la récupération de la LSP de la couche de service a échoué,
en cas d'une connexion défaillante de la LSP de la couche de service, le noeud de tête de la LSP de la couche client déclenche un retardateur préconfiguré pour ainsi entamer la protection ou la récupération, et
lorsque le noeud de tête de la LSP de la couche client reçoit les informations de défaillance inter-domaine émises par la LSP de la couche de service avant expiration du retardateur, la LSP de la couche client arrête le retardateur et protège ou récupère la LSP de la couche de service ;
ladite LSP de la couche de service et ladite LSP de la couche client appartenant à des domaines de systèmes autonomes (SA) différents.

2. Procédé selon la revendication 1, dans lequel, en outre, après l'étape au cours de laquelle la LSP de la couche de service émet (S104, S306) des informations de défaillance inter-domaine auprès d'un noeud de tête de la LSP d'une couche client de la LSP de la couche de service :
la LSP de la couche client protège ou récupère la LSP de la couche de service, et
lorsque la protection ou la récupération de la LSP de la couche de service par la LSP de la couche client échoue, la LSP de la couche client continue d'émettre les informations de défaillance inter-domaine à la LSP d'une couche client de la LSP de la couche client.

3. Procédé selon la revendication 2, dans lequel l'étape au cours de laquelle la LSP de la couche client protège ou récupère la LSP de la couche de service comprend le fait que :
la LSP de la couche client établit une nouvelle connexion conformément aux informations de défaillance inter-domaine, et permute les services de la LSP de la couche client vers la nouvelle connexion.

4. Procédé selon la revendication 1, dans lequel, en outre :
lorsqu'une défaillance indiquée par les informations de défaillance inter-domaine disparait, la LSP de la couche de service émet un message de disparition de défaillance inter-domaine auprès de la LSP de la couche client, ledit message de disparition de défaillance inter-domaine servant à indiquer que la défaillance indiquée par les informations de défaillance inter-domaine a disparu.

5. Procédé selon la revendication 4, dans lequel, en outre, après l'étape au cours de laquelle la LSP de la couche de service émet un message de disparition de défaillance inter-domaine auprès de la LSP de la couche client :
la LSP de la couche client reçoit le message de disparition de défaillance inter-domaine, et juge s'il y a lieu de permuter les services de la LSP de la couche client pour revenir à une connexion de la LSP de la couche de service conformément à une préconfiguration ; et dans l'affirmative, permute les services de la LSP de la couche client pour revenir à la connexion de la LSP de la couche de service.

6. Procédé selon l'une quelconque des revendications 1 à 5, dans lequel les informations de défaillance inter-domaine comprennent l'emplacement de la défaillance et/ou le type de défaillance.

7. Système comprenant un noeud de tête d'une voie à commutation par étiquettes (LSP, Label Switched Path) d'une couche de service et un noeud de tête d'une LSP d'une couche client, ledit système étant conçu pour mettre en oeuvre le procédé selon la revendication 1.
